(19) **Europäisches Patentamt / European Patent Office / Office européen des brevets**

(11) **EP 4 761 432 A1**

(12) **EUROPEAN PATENT APPLICATION**
published in accordance with Art. 153(4) EPC

(43) Date of publication:
**17.06.2026 Bulletin 2026/25**

(21) Application number: **24852145.2**

(22) Date of filing: **26.07.2024**

(51) International Patent Classification (IPC):
**H04W 72/232** (2023.01)  **H04W 72/21** (2023.01)
**H04W 72/1268** (2023.01)  **H04W 8/24** (2009.01)
**H04L 5/00** (2006.01)  **H04B 7/06** (2006.01)

(52) Cooperative Patent Classification (CPC):
**H04B 7/06; H04L 5/00; H04W 8/24; H04W 72/1268; H04W 72/21; H04W 72/232**

(86) International application number:
**PCT/KR2024/010926**

(87) International publication number:
**WO 2025/033789 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 US 202363531546 P**

(71) Applicant: **LG Electronics Inc.**
**Yeongdeungpo-gu**
**Seoul 07336 (KR)**

(72) Inventors:
• **KIM, Hyungtae**
**Seoul 06772 (KR)**
• **KANG, Jiwon**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR UPLINK TRANSMISSION AND RECEPTION IN WIRELESS COMMUNICATION SYSTEM**

(57) Disclosed are a method and device for uplink transmission and reception in a wireless communication system. A method for a terminal to perform uplink transmission according to an embodiment of the present disclosure may comprise the steps of: receiving, from a base station, downlink control information (DCI) including at least one of a first transmit precoding matrix indicator (TPMI) field or a second TPMI field; and performing uplink transmission on the basis of the DCI, wherein the largest value among a first bit size, a second bit size, and a third bit size is set as the size of the first TPMI field, and each of the first bit size, the second bit size, and the third bit size may be based on whether simultaneous transmission across multi-panel (STxMP) transmission is indicated, the type of codebook subset, the maximum value of the number of ranks, and the type of a full power mode.

FIG.8

RECEIVING DCI INCLUDING AT LEAST ONE OF A FIRST TPMI FIELD OR A SECOND TPMI FIELD FROM THE BASE STATION — S810

PERFORMING UPLINK TRANSMISSION BASED ON THE DCI — S820

## Description

[TECHNICAL FIELD]

The present disclosure relates to a wireless communication system, and more specifically, to a method and device for performing uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

An additional technical problem of the present disclosure is to provide a method and device for applying beams to each panel when simultaneous transmission across multiple panels (STxMP) is established in a wireless communication system.

An additional technical problem of the present disclosure is to provide a method and device for transmitting and receiving downlink control information (DCI) for each multi-panel having different capabilities.

The technical objects to be achieved by the present disclosure are not limited to the above-described technical objects, and other technical objects which are not described herein will be clearly understood by those skilled in the pertinent art from the following description.

[Technical Solution]

According to one embodiment of the present disclosure, a method performed by a user equipment (UE) in a wireless communication system may include receiving downlink control information (DCI) including at least one of a first transmit precoding matrix indicator (TPMI) field or a second TPMI field from a base station; and performing uplink transmission based on the DCI, and a size of the first TPMI field may be determined as a maximum value among a first bit size, a second bit size, and a third bit size, and each of the first bit size, the second bit size, and the third bit size may be based on whether simultaneous transmission across multi-panels (STxMP) transmission is indicated, a type of codebook subset, a maximum value of a number of ranks, and a type of full power mode.

According to one embodiment of the present disclosure, a method performed by a base station in a wireless communication system may include transmitting downlink control information (DCI) including at least one of a first transmit precoding matrix indicator (TPMI) field or a second TPMI field to a user equipment (UE); and performing uplink reception based on the DCI, and a size of the first TPMI field may be determined as a maximum value among a first bit size, a second bit size, and a third bit size, and each of the first bit size, the second bit size, and the third bit size may be based on whether simultaneous transmission across multi-panels (STxMP) transmission is indicated, a type of codebook subset, a maximum value of a number of ranks, and a type of full power mode.

[Technical Effects]

According to various embodiments of the present disclosure, a method and device for performing uplink transmission and reception in a wireless communication system may be provided.

Furthermore, according to various embodiments of the present disclosure, a method and device for applying beams per panel when STxMP is configured in a wireless communication system may be provided.

In addition, according to various embodiments of the present disclosure, a method and device for transmitting and receiving multi-panel DCs having different capabilities may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a signaling procedure between a network and a UE for an uplink transmission and reception method according to an embodiment of the present disclosure.

FIG. 8 is a diagram illustrating an uplink transmission operation of a terminal in a wireless communication system to which the present disclosure may be applied.

FIG. 9 is a diagram illustrating an uplink reception operation of a base station in a wireless communication system to which the present disclosure may be applied.

FIG. 10 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control

- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

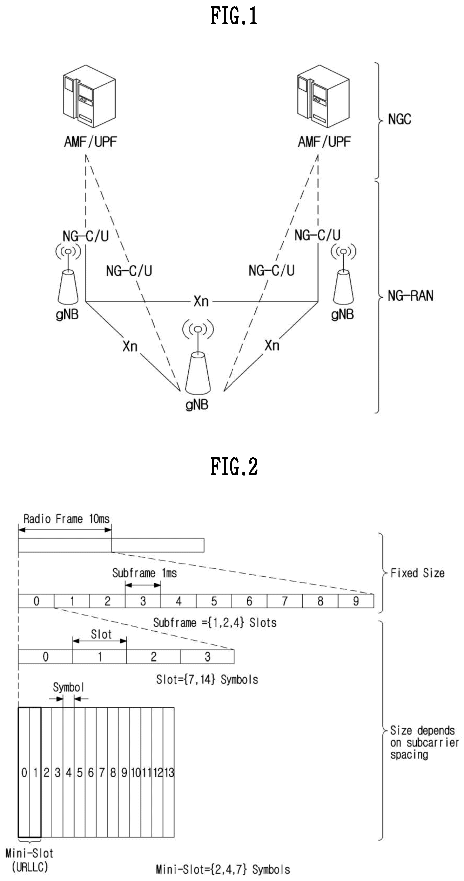

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=2$^{\mu}$·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{stot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

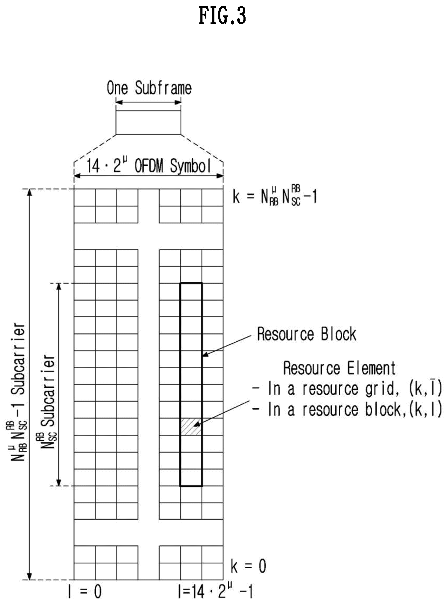

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto.

In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

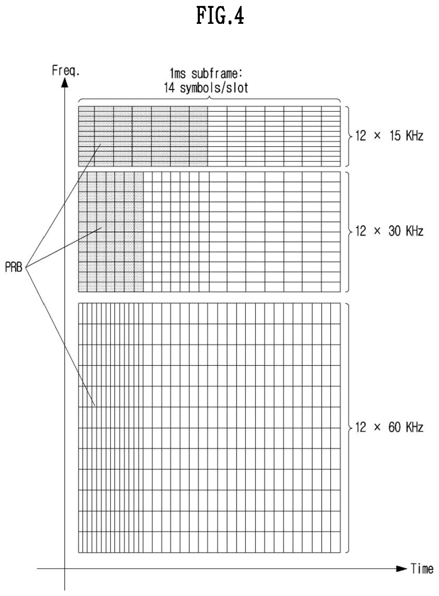

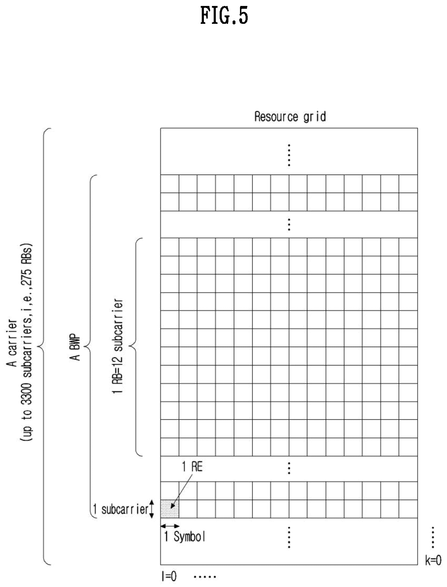

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot.

In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

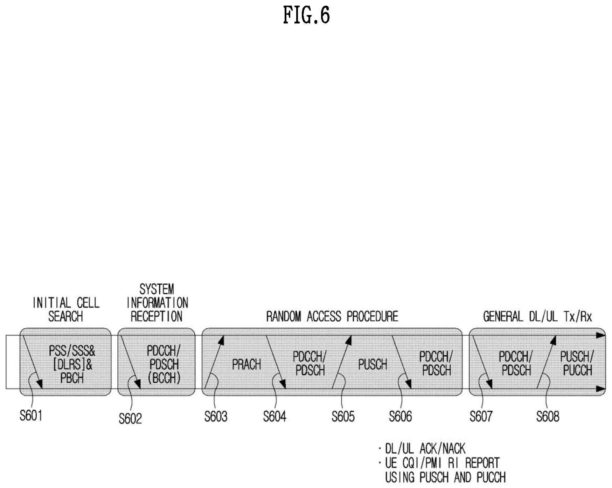

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0 0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-Co Location (QCL)

Antenna ports are defined such that the channel through which a symbol on an antenna port is carried can be inferred from the channel through which another symbol on the same antenna port is carried. Two antenna ports are said to be in a QC/QCL (quasi co-located or quasi co-location) relationship if the properties of the channel through which a symbol on one antenna port is carried can be inferred from the channel through which a symbol on another antenna port is carried.

Here, the channel characteristics include at least one of delay spread, Doppler spread, frequency/Doppler shift, average received power, received timing/average delay, and spatial Rx parameter. Here, the spatial Rx parameter refers to a spatial (reception) channel characteristic parameter such as angle of arrival.

The UE may be configured with a list of up to M TCI-State configurations in the higher layer parameter PDSCH-Config to decode the PDSCH according to the detected PDCCH having the intended DCI for the UE and the given serving cell. The M depends on the UE capability.

Each TCI-State includes parameters for establishing a quasi co-location relationship between one or two DL reference signals and the DM-RS port of the PDSCH.

The quasi co-location relationship is configured by the higher layer parameters qc1-Type1 for the first DL RS and qcl-Type2 (if set) for the second DL RS. For two DL RSs, the QCL types are not the same, regardless of whether the references are the same DL RS or different DL RSs.

The quasi co-location type corresponding to each DL RS is given by the higher layer parameter qcl-Type of QCL-Info, and can take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is a specific NZP CSI-RS, the corresponding NZP CSI-RS antenna port(s) can be indicated/configured to be QCL with a specific TRS from a QCL-Type A perspective and with a specific SSB from a QCL-Type D perspective. A UE that has received such an indication/configuration may receive the corresponding NZP CSI-RS using the Doppler and delay values measured at the QCL-TypeA TRS, and apply the reception beam used for QCL-TypeD SSB reception to the corresponding NZP CSI-RS reception.

The UE may receive an activation command by MAC CE signaling used to map up to eight TCI states to codepoints of the DCI field 'Transmission Configuration Indication'.

Additionally, one or more DL TCI states as well as one or more UL TCI states may be indicated together via DL DCI (e.g., DCI format 1_1 or 1_2). As another example, the DL DCI may include only UL TCI states without DL TCI states. UL beam (i.e., UL spatial parameters) and power control related parameters may be indicated by the UL TCI states. As an example, one UL TCI state may be indicated via the TCI field of the DL DCI, and the UL TCI state may be applied to all or part of the PUSCH/PUCCH/SRS resource sets after a beam application time.

Multi-TRP related operations

Coordinated Multi Point (CoMP) is a technique that effectively controls interference by having multiple base stations exchange (e.g., using the X2 interface) or utilize channel information (e.g., RI/CQI/PMI/LI (layer indicator)) fed back from terminals and cooperatively transmit it to terminals. Depending on the method used, CoMP can be categorized into joint transmission (JT), coordinated scheduling (CS), coordinated beamforming (CB), dynamic point selection (DPS), and dynamic point blocking (DPB).

The M-TRP transmission method, in which M TRPs transmit data to one UE, may be broadly divided into i) eMBB M-TRP transmission, a method for increasing transmission rate, and ii) URLLC M-TRP transmission, a method for increasing reception success rate and reducing latency.

In addition, from the perspective of DCI transmission, the M-TRP transmission method may be divided into i) M-TRP transmission based on M-DCI (multiple DCI) in which each TRP transmits a different DCI, and ii) M-TRP transmission based on S-DCI (single DCI) in which one TRP transmits a DCI. For example, in the case of S-DCI based M-TRP transmission, since all scheduling information for data transmitted by an M TRP must be transmitted to the terminal through a single DCI, it can be used in an ideal backhaul (ideal BH: ideal BackHaul) environment in which dynamic cooperation between the two TRPs is possible.

The UE may recognize the PUSCH (or PUCCH) scheduled by the DCI received in different control resource sets (CORESETs) (or CORESETs belonging to different CORESET groups) as a PUSCH (or PUCCH) transmitted in different TRPs or as a PDSCH (or PDCCH) of different TRPs. In addition, the method for UL transmission (e.g., PUSCH/PUCCH) transmitted in different TRPs described below may be equally applied to UL transmission (e.g., PUSCH/PUCCH) transmitted in different panels belonging to the same TRP.

Hereinafter, the CORESET group identifier (group ID) described/mentioned in the present disclosure may mean an index/identification information (e.g., ID) for distinguishing a CORESET for each TRP/panel. And the CORESET group may be a group/union of CORESETs distinguished by an index/identification information (e.g., ID)/the CORESET group ID for distinguishing a CORESET for each TRP/panel. For example, the CORESET group ID may be specific index information defined in the CORSET configuration. In this case, the CORESET group may be configured/indicated/defined by an index defined in the CORESET configuration for each CORESET. And/or the CORESET group ID may mean an index/identification information/indicator for distinguishing/identifying between CORESETs configured/associated with each TRP/panel. Hereinafter, the CORESET group ID described/mentioned in the present disclosure may be expressed by being replaced with a specific index/specific identification information/specific indicator for distinguishing/identifying the CORESETs configured/associated in each TRP/panel. The CORESET group ID, i.e., the specific index/specific identification information/specific indicator for distinguishing/identifying the CORESETs configured/associated in each TRP/panel, may be configured/indicated to the UE through higher layer signaling (e.g., RRC signaling)/second layer signaling (L2 signaling, e.g., MAC-CE)/first layer signaling (L1 signaling, e.g., DCI). For example, PDCCH detection may be configured/indicated to be performed for each TRP/panel (i.e., for each TRP/panel belonging to the same CORESET group) in units of the corresponding CORESET group. And/or, uplink control information (e.g., CSI, HARQ-A/N (ACK/NACK), SR (scheduling request)) and/or uplink physical channel resources (e.g., PUCCH/PRACH/SRS resources) may be separately managed/controlled for each TRP/panel in the corresponding CORESET group (i.e., for each TRP/panel belonging to the same CORESET group). And/or, HARQ A/N (process/retransmission) for PDSCH/PUSCH, etc. scheduled for each TRP/panel in the corresponding CORESET group (i.e., for each TRP/panel belonging to the same CORESET group) may be managed.

For example, the ControlResourceSet information element (IE), which is an higher layer parameter, is used to configure a time/frequency control resource set (CORESET). For example, the control resource set (CORESET) may be related to detection and reception of downlink control information. The ControlResourceSet IE may include a CORESET-related ID (e.g., controlResourceSetID)/an index of a CORESET pool for the CORESET (e.g., CORESETPoolIndex)/time/frequency resource configuration of the CORESET/TCI information related to the CORESET, etc. For example, the index of the CORESET pool (e.g., CORESETPoolIndex) may be set to 0 or 1. In the above description, a CORESET group may correspond to a CORESET pool, and a CORESET group ID may correspond to a CORESET pool index (e.g., CORESETPoolIndex).

The Rel-17 NR standard supports (1) MTRP PDCCH repeated transmission, (2) MTRP PDCCH single frequency network (SFN) transmission, (3) MTRP PDSCH SFN transmission, (4) S-DCI-based MTRP PUSCH repeated transmission, and (4) single PUCCH resource-based MTRP PUCCH repeated transmission. All of these transmission techniques are URLLC target enhancements for increasing reliability, in which the same contents (i.e., DCI or UL/DL TB or UCI) are repeatedly transmitted. In the case of MTRP PDCCH repetitive transmission, it is repeatedly transmitted in TDM or FDM, MTRP PDCCH/PDSCH SFN is repeatedly transmitted at the same time/frequency/layer, S-DCI-based MTRP PUSCH repetitive transmission is repeatedly transmitted in TDM, and single PUCCH resource-based MTRP PUCCH repetitive transmission is repeatedly transmitted in TDM.

Simultaneous transmission across multi-panel (STxMP)

In Rel-18, the introduction of a method for a UE to simultaneously transmit multiple channels/reference signals (RSs) of the same type or multiple channels/RSs of different types is being discussed. In the case of a legacy UE, the operation of transmitting multiple channels/RSs at one time (i.e., the same time resource) is restricted (for example, it is possible to simultaneously transmit multiple SRS resources of different SRS resource sets for UL beam measurement, but it is not possible to simultaneously transmit multiple PUSCHs), but this restriction may be relaxed in the case of advanced UEs in the future, and the advanced UEs in the future will be able to simultaneously transmit multiple channels or RSs using multiple transmit panels. This operation may be referred to as simultaneous transmission across multi-panels (STxMP), and a UE supporting this operation may be referred to as an STxMP UE. For example, two PUSCHs (PUSCH 1, 2) corresponding to (carrying) two UL TBs may be scheduled in the same resource element (RE) (or multiple identical REs), and spatial relation RS 1 and power control (PC) parameter set 1 (i.e., UL TCI state 1) and spatial relation RS 2 and PC parameter set 2 (i.e., UL TCI state 2) may be configured for transmission of PUSCH 1 and 2, respectively. The UE may transmit PUSCH 1 using panel 1 corresponding to UL TCI state 1, and simultaneously transmit PUSCH 2 using panel 2 corresponding to UL TCI state 2.

When scheduling a PUSCH through DCI, the base station may indicate whether the PUSCH will be transmitted in STxMP, in a single panel, or in M-TRP PUSCH repetition. In this case, the UE must have STxMP capability, and the STxMP mode (e.g., SDM method/mode or SFN method/mode) may be enabled in advance through higher layer signaling (e.g., RRC signaling). For this purpose, the existing SRS resource set indication field may be redefined and used, or a new DCI field may be introduced.

Two methods are being considered for the Rel-18 STxMP transmission technique: single frequency network (SFN) and spatial division multiplexing (SDM).

The SFN method is a method in which the same channel (or RS) transmitted from one panel is transmitted from another panel. However, since the UL channel (or RS) of each panel is different, it is transmitted using a different precoder, different transmission power, and different transmission beam (i.e., spatial relation RS indicated by UL TCI) for each panel.

The SDM method is a method that can be transmitted from rank 2 or higher, in which some of the multi-layers are transmitted on panel 1 and the remaining layers are transmitted on panel 2. For example, in a 2-layer transmission, the first layer can be transmitted on panel 1 and the second layer can be transmitted on panel 2. Even in this case, since the UL channels of each panel are different, different precoders, different transmission powers, and different transmission beams (i.e., spatial relation RSs indicated by UL TCI) are used for transmission for each panel.

The following operations may be supported for dynamic switching between STxMP SDM mode and sTRP transmission.

- For sTRP transmission, the maximum number of layers of sTRP transmission may be configured by maxRank (or Lmax).
- For SDM mode: A single maximum number of layers (e.g., separate from maxRank (or Lmax) in case of sTRP) may be configured, which applies separately to the first SRS resource set and the second SRS resource set.

The total number of PUSCH antenna ports used for SDM and sTRP may be the same, but is not limited thereto.

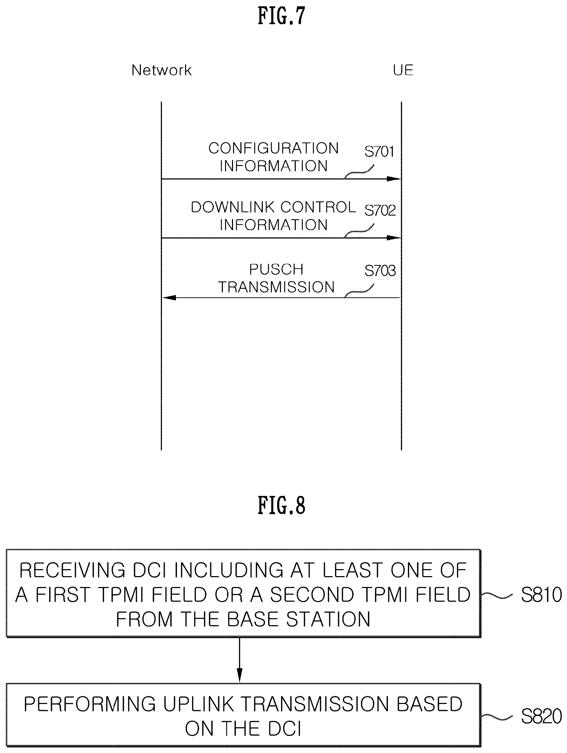

FIG. 7 illustrates a signaling procedure between a network and a UE for a PUSCH transmission and reception method according to one embodiment of the present disclosure.

FIG. 7 illustrates signaling between a network (e.g., TRP 1, TRP 2) and a UE in a situation of multiple TRPs (i.e., M-TRP, or multi-cell, hereinafter, all TRPs can be replaced with cells) to which the methods proposed in the present disclosure (e.g., combinations of one or more of the proposed methods in Embodiments 1 to 4-1, described below) can be applied.

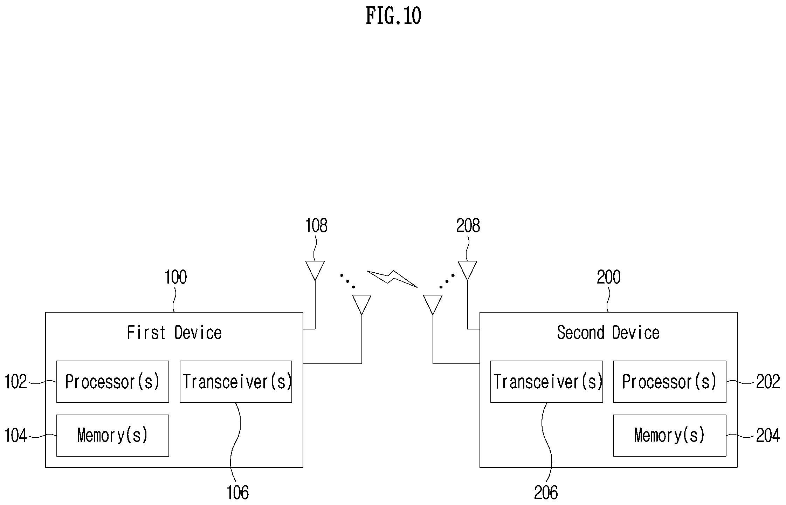

Here, the UE/network side is exemplary and may be replaced with various devices as described with reference to FIG. 10. FIG. 7 is provided for convenience of explanation and does not limit the scope of the present disclosure. In addition, some step(s) shown in FIG. 7 may be omitted depending on the situation and/or settings. In addition, in the operation of the network side/UE of FIG. 7, the above-described uplink transmission/reception operation, M-TRP-related operation, etc. may be referenced or utilized.

In the following description, the network side may be a single base station including multiple TRPs, or may be a single cell including multiple TRPs. Alternatively, the network side may include multiple RRHs (remote radio heads)/RRUs (remote radio units). For example, an ideal/non-ideal backhaul may be established between TRP 1 and TRP 2 constituting the network side. In addition, although the following description is based on multiple TRPs, it can be equally extended and applied to transmission through multiple panels/cells, and can also be extended and applied to transmission through multiple RRHs/RRUs, etc.

A panel may be replaced with an expression such as an SRS resource set, a CORESET group (or a CORESET pool), a TRP, a beam, a capability value index, an antenna array, a cell (e.g., a macro cell/small cell/pico cell, etc.), a transmission point (TP), a base station (gNB, etc.), etc. As described above, a panel and/or a TRP may be distinguished based on information about a CORESET group (or a CORESET pool) (e.g., a CORESET index, an ID).

For example, different SRS resource sets/SRS resources may be mapped/configured/corresponded to different panels. For example, the first panel may be mapped to SRS resource set 0, and the second panel may be mapped to SRS resource set 1. The SRS resource(s) of SRS resource set 0 may refer to the transmit antenna port(s) of the first panel, and the SRS resource(s) of SRS resource set 1 may refer to the transmit antenna port(s) of the second panel.

For example, if a single UE is configured to transmit and receive with multiple TRPs (or cells), this may mean that multiple CORESET groups (or CORESET pools) are configured for the single UE. The configuration of such CORESET groups (or CORESET pools) may be performed through higher layer signaling (e.g., RRC signaling, etc.).

In addition, the base station may be a general term for an object that performs data transmission and reception with a terminal. For example, the base station may be a concept that includes one or more TPs (Transmission Points), one or more TRPs (Transmission and Reception Points), etc. In addition, the TPs and/or TRPs may include a panel of the base station, a transmission and reception unit, etc.

Meanwhile, although not shown in FIG. 7, for example, the UE may report UE capability information to the network via/using TRP 1 (and/or TRP 2).

Here, in case of a UE supporting multi-panel (i.e., STxMP) uplink (e.g., PUSCH) transmission, the UE capability information may include at least one of i) information on a codebook subset supported for each of the first panel and the second panel, and ii) information on a codebook subset supported for each of multi-panel transmission (i.e., STxMP) and non-multi-panel transmission (i.e., STRP (single TRP) transmission). Additionally, the UE capability information reported by the UE to the base station may include various types of capability information described in Embodiments 1 to 4-1 below.

The UE may receive configuration information from the network via/using TRP 1 (and/or TRP 2) (S701).

The above configuration information may include information related to network configuration (e.g., TRP configuration) / information related to M-TRP-based transmission and reception (e.g., resource allocation, etc.). In this case, the configuration information may be transmitted through higher layer signaling (e.g., RRC signaling, MAC-CE, etc.).

In addition, for example, the configuration information may include information for configuring joint TCI and/or separate DL/UL TCI. For example, the configuration information may include a list of TCI states that provide a reference for determining an uplink transmission spatial filter of a DMRS/uplink signal (e.g., SRS) of an uplink channel (e.g., PUSCH, PUCCH).

In addition, for example, the configuration information may include information on a multi-panel (i.e., STxMP) PUSCH transmission scheme. For example, it may include information (e.g., a higher layer parameter multipanelscheme) that sets whether to transmit multi-panel (i.e., STxMP), and through the information, whether to transmit STxMP and the STxMP transmission scheme (e.g., SDM scheme or SFN scheme) may be configured.

In addition, for example, the configuration information may include information for configuring the maximum number of layers per panel for multi-panel (i.e., STxMP) PUSCH transmission. That is, when the UE supports two panels and multi-panel PUSCH transmission is configured through two panels, the configuration information may include first information/parameter for configuring the maximum number of layers for the first panel (e.g., upper layer parameter maxRank1, higher layer parameter for configuring Lmax1 value, etc.) and second information/parameter for configuring the maximum number of layers for the second panel (e.g., higher layer parameter maxRank2, higher layer parameter for configuring Lmax2 value, etc.). In addition, the configuration information may further include third information/parameter for configuring the maximum number of layers for STRP PUSCH transmission (e.g., higher layer parameter maxRank, higher layer parameter for configuring Lmax value, etc.). Additionally, the configuration information may further include codebook subset information for the first panel (e.g., higher layer parameter codebookSubset1) and codebook subset information for the second panel (e.g., higher layer parameter codebookSubset2).

In addition, for example, the configuration information may include information on an SRS resource set, and at least two SRS resource sets may be configured for the multi-panel PUSCH transmission. Here, as the usage for the SRS resource set is configured as 'codebook' or 'non-codebook', it may be indicated whether the PUSCH transmission scheduled by the DCI referencing the corresponding SRS resource set corresponds to a codebook-based uplink transmission or a non-codebook-based uplink transmission.

In addition, the above configuration information may include configuration information related to STRP PUSCH transmission or multi-panel (i.e., STxMP) PUSCH transmission described in the proposed method described below.

The UE may receive downlink control information (DCI) from the network through/using TRP 1 (and/or TRP 2) (S702).

The DCI may be transmitted via a downlink control channel (e.g., PDCCH) and may schedule a STRP PUSCH transmission or a multi-panel (STxMP) PUSCH transmission (i.e., including a UL grant).

Additionally, the DCI may include a sounding reference signal (SRS) resource set indicator field, a first precoding-related field, and a second precoding-related field.

Here, based on the value of the SRS resource set indicator field, it may be indicated whether the PUSCH transmission scheduled by the DCI is a STRP PUSCH transmission (e.g., the value of the SRS resource set indicator field is 00 or 01) or a multi-panel (STxMP) PUSCH transmission (e.g., the value of the SRS resource set indicator field is 10 or 11).

In addition, when the PUSCH transmission is a codebook-based transmission, the first precoding-related field and the second precoding-related field may correspond to a first precoding information and number of layers field and a second precoding information and number of layers field, respectively.

In addition, when the PUSCH transmission is a non-codebook-based transmission, the first precoding-related field and the second precoding-related field may correspond to a first sounding reference signal (SRS) resource indicator field and a second SRS resource indicator field, respectively.

A precoder and/or rank applied across one or more layers for a first panel may be indicated/determined by the first precoding-related field, and a precoder and/or rank applied across one or more layers for a second panel may be indicated/determined by the second precoding-related field.

The UE may transmit a PUSCH to the network through/using TRP 1 (and/or TRP 2) (S703).

Here, in case of STRP PUSCH transmission, the UE may perform STRP PUSCH transmission to the network through/using a single TRP according to the scheduling of DCI based on a single spatial relationship RS (or UL TCI state).

Alternatively, in case of multi-panel (STxMP) PUSCH transmission, the UE may perform multi-panel (STxMP) PUSCH transmission (SDM mode or SFN mode) to the network through/using multiple TRPs using multiple panels according to scheduling of DCI based on different spatial relationship RSs (or different UL TCI states).

STRP transmission and switching method of STRP transmission

Dynamic switching between SDM transmission mode and STRP transmission in a single-DCI based on STxMP PUSCH may be used. For example, a base station may dynamically indicate SDM transmission mode or STRP transmission via a DCI containing a (2-bit) SRS resource set indicator.

Here, the maximum number of layers for STRP transmission may be configured by information related to the maximum number of ranks (maxRank) and/or information related to the maximum number of candidate SSBs (Lmax) (Option 1). Additionally or alternatively, the maximum number of layers for STRP transmission may be configured by an RRC message, etc. (Option 2).

Additionally, the maximum number of layers for SDM transmission may be configured in various ways. For example, a single maximum number of layers (separate from the maximum number of layers for STRP) may be configured (by the base station) separately for the first SRS resource set and the second SRS resource set (Alternative 1). As another example, the maximum number of ranks (or the maximum number of candidate SSBs) may be applied separately to the first SRS resource set and the second SRS resource set (Alternative 1a). As another example, separate maximum number of layers may be set (by the base station) for the first SRS resource set and the second SRS resource set (Alternative 2). As another example, there may be no dedicated SDM configuration. The maximum number of layers in STRP and the UE capability report for SDM may be used to determine the maximum number of layers for SDM transmission (Alternative 3). As another example, the maximum number of layers in Option 1 and Option 2 described above may be applied separately to the first SRS resource set and the second SRS resource set (Alternative 4).

For example, to ensure the same size of DCI for STRP transmission and SDM transmission, TPMI/SRI may be interpreted in various ways. For example, the maximum number of layers across a panel is defined to be 4 or less, and in the SDM-based STxMP method, the maximum number of layers per panel can be defined to be 2, but is not limited thereto.

In the alternative 2, the maximum number of new ranks (maxRank) per panel may be configured by the base station via an RRC message. That is, the maximum number of ranks for panel 1 (maxRank 1) and the maximum number of ranks for panel 2 (maxRank 2) may be configured via an RRC message. In addition, the maximum number of legacy ranks may be configured via an RRC message for STRP (i.e., non-STxMP) transmission. Accordingly, a larger maximum number of ranks may require a larger TPMI field size.

In another example of the present disclosure, the maximum number of candidate SSBs (Lmax) for each panel may be configured by the base station via an RRC message. That is, the maximum number of candidate SSBs for panel 1 (Lmax 1) and the maximum number of candidate SSBs for panel 2 (Lmax 2) may be configured via an RRC message. In addition, the maximum number of legacy candidate SSBs may be configured via an RRC message for STRP (i.e., non-STxMP) transmission. Accordingly, a larger maximum number of candidate SSBs may require a larger SRI field size.

The TPMI field size may be changed by the maximum number of ranks (maxRank) as well as the codebook subset restriction (CBSR). The UL codebook can be set as a full coherent codebook, a partial coherent codebook, or a non-coherent codebook depending on the CBSR. The number of precoders in a codebook can be in the order of a full coherent codebook, a partial coherent codebook, and a non-coherent codebook. For example, a full coherent codebook can include a partial coherent codebook and a non-coherent codebook, and a partial coherent codebook can include a non-coherent codebook. That is, as the number of precoders increases, a larger TPMI field size may be required.

The TPMI field size may be changed not only by the maximum number of ranks but also by the full power mode. For example, in the case of full power mode 1, one or more precoders satisfying the full coherent property can be added to the partially coherent codebook and/or the non-coherent codebook. Accordingly, more precoders can be indicated by the codebook set to full power mode 1 than by the codebook set to another full power mode or not set to full power mode. In this case, other parameters determining the codebook size (e.g., the maximum number of ranks, CBSR, etc.) can be the same.

SRS resource set 0 may be configured to indicate an antenna port corresponding to the first panel of the UE. SRS resource set 1 may be configured to indicate an antenna port corresponding to the second panel of the UE. That is, the first panel may correspond to SRS resource set 0, and the second panel may correspond to SRS resource set 1.

In a basic wireless communication system, DCI for STxMP transmission of CB (codebook-based) PUSCH may include two TPMI fields and two SRI fields, and DCI for STxMP transmission of NCB (non-codebook based) PUSCH may include two SRI fields.

The following describes a method for calculating the DCI payload size according to a transmission panel and then determining the final DCI payload size as the maximum value of the payload size.

FIG. 8 is a diagram for describing an uplink transmission operation of a UE in a wireless communication system to which the present disclosure may be applied.

In describing the present disclosure, uplink transmission may include at least one of a physical uplink control channel (PUCCH), a physical uplink shared channel (PUSCH), or an SRS.

The UE may receive downlink control information (DCI) including at least one of a first transmit precoding matrix indicator (TPMI) field or a second TPMI field from the base station (S810).

Here, the first TPMI field may be expressed as a first precoding information and number of layers field, and the second TPMI field may be expressed as a second precoding information and number of layers field (or, a second precoding information field). In addition, the UE may receive configuration information related to the codebook-based uplink transmission from the base station through an RRC (radio resource control) message.

In addition, one or more uplink channels corresponding to each panel (i.e., each SRS resource set) may be scheduled through a single DCI, but is not limited thereto. For example, if two uplink channels are each transmitted for each SRS resource set, one uplink channel may be scheduled through a first DCI, and the other uplink channel may be scheduled through a second DCI.

As described above, the size of the first TPMI field included in the DCI may be determined as the maximum value among the first bit size, the second bit size, and the third bit size. Each of the first bit size, the second bit size, and the third bit size may be based on whether simultaneous transmission across multi-panels (STxMP) transmission is indicated, the type of codebook subset, the maximum value of the number of ranks, and the type of full power mode.

Here, the type of the codebook subset may be one of a full coherent codebook, a partial coherent codebook, and a non-coherent codebook. That is, each of the types of the first codebook subset and the second codebook subset described below may be one of a full coherent codebook, a partial coherent codebook, and a non-coherent codebook.

And, the type of full power mode may be one of full power mode 1, full power mode 2, or non-full power mode. That is, each of the type of the first full power mode and the type of the second full power mode described below can be one of full power mode 1, full power mode 2, or non-full power mode.

As an example of the present disclosure, whether to transmit STxMP may be indicated by an SRS resource set indicator field included in DCI. For example, STxMP transmission may not be indicated based on whether one of the first SRS resource set or the second SRS resource set is indicated by the SRS resource set indicator field. That is, if one of the first SRS resource set or the second SRS resource set is indicated by the SRS resource set indicator field, uplink transmission based on the indicated first SRS resource set or second SRS resource set may be performed. STxMP transmission may be indicated based on whether the first SRS resource set and the second SRS resource set are indicated by the SRS resource set indicator field. That is, uplink transmissions corresponding to each of the first SRS resource set and the second SRS resource set may be performed simultaneously.

For example, the first bit size may be related to a first case in which STxMP transmission is not indicated and the type of the codebook subset, the maximum value of the number of ranks, and the type of the full power mode are the maximum value of the number of first ranks, and the first full power mode configured for the first sounding reference signal (SRS) resource set. That is, when STxMP is not indicated, the first bit size may be determined based on the first type of the codebook subset, the first maximum value of the rank, and the first full power mode configured for the first SRS resource set.

For example, the second bit size may be related to a second case in which STxMP transmission is not indicated and the type of the codebook subset, the maximum value of the number of ranks, and the type of the full power mode are the second type of the codebook subset, the second maximum value of the number of ranks, and the second full power mode. That is, when STxMP is not indicated, the second bit size may be determined based on the second type of the codebook subset, the maximum value of the second rank, and the second full power mode configured for the second SRS resource set.

For example, the third bit size may be related to a third case in which STxMP transmission is indicated, and the type of codebook subset, the maximum value of the number of ranks, and the type of full power mode are the first type of the codebook subset, the first maximum value of the number of ranks, and the first full power mode configured for the first SRS resource set. That is, when STxMP is indicated, the third bit size may be determined based on the first type of the codebook subset, the first maximum value of the number of ranks, and the first full power mode configured for the first SRS resource set.

For example, the second TPMI field may be determined to have a fourth bit size. The fourth bit size may be related to a fourth case in which STxMP transmission is indicated, and the type of the codebook subset, the maximum value of the number of ranks, and the type of the full power mode are the second type of the codebook subset, the second maximum value of the number of ranks, and the second full power mode configured for the second SRS resource set. That is, when STxMP transmission is indicated, the fourth bit size may be determined based on the second type of the codebook subset, the second maximum value of the number of ranks, and the second full power mode configured for the second SRS resource set.

Additionally, the DCI may include a first SRS resource indicator (SRI) field and a second SRI field. For example, the size of the first SRI field may be determined as the maximum value among a fifth bit size, a sixth bit size, and a seventh bit size. Each of the fifth bit size, the sixth bit size, and the seventh bit size may be based on whether STxMP transmission is indicated and the number of selectable SRS resources in the SRS resource set.

For example, the fifth bit size may be related to the number of selectable SRS resources of the first SRS resource set based on whether STxMP transmission is indicated. The sixth bit size may be related to the number of selectable SRS resources of the second SRS resource set based on whether STxMP transmission is indicated. The seventh bit size may be related to the number of selectable SRS resources of the first SRS resource set based on whether STxMP transmission is indicated.

Additionally, the second SRI field size may be related to the number of selectable SRS resources of the second SRS resource set based on which STxMP transmission is indicated.

The UE may perform uplink transmission based on the DCI (S820). That is, the UE may perform uplink transmission through the SRS resource set indicator field, the first TPMI field, the second TPMI field, the first SRI field, and the second SRI field included in the DCI.

For example, when STxMP transmission is indicated by the SRS resource set indicator field, the UE may perform uplink transmission related to the first/second SRS resource set using the STxMP scheme through the first/second TPMI field and the first/second SRI field. As another example, when STxMP transmission is not indicated by the SRS resource set indicator field, the terminal may perform uplink transmission related to the first SRS resource set (or the second SRS resource set) through the first TPMI field (or the second TPMI field) and the first SRI field (or the second SRI field).

The method performed by the UE described in the example of FIG. 8 may be performed by the first device (100) of FIG. 10. For example, one or more processors (102) of the first device (100) of FIG. 10 may receive DCI including at least one of the first TPMI field or the second TPMI field from a base station via one or more transceivers (106). The one or more processors (102) may perform uplink transmission based on the DCI.

The above memory (104) can store instructions for performing the method described in the example of FIG. 8 when executed by one or more processors (102).

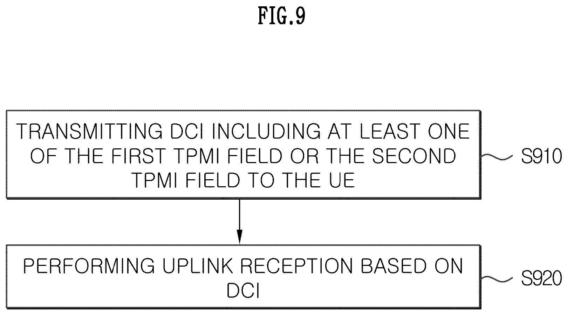

FIG. 9 is a diagram for describing an uplink reception operation of a base station in a wireless communication system to which the present disclosure may be applied.

The base station may transmit DCI including at least one of the first TPMI field or the second TPMI field to the UE (S910).

The base station may transmit configuration information related to codebook-based uplink transmission and/or configuration information related to STxMP to the UE via an RRC message before transmitting DCI. The configuration of each field included in the DCI has been described with reference to FIG. 8, so any redundant description will be omitted.

The base station may perform uplink reception based on DCI (S920).

The method performed by the base station described in the example of FIG. 9 may be performed by the second device (200) of FIG. 10. For example, one or more processors (202) of the second device (200) of FIG. 10 may transmit DCI including at least one of the first TPMI field or the second TPMI field to the terminal via one or more transceivers (206). The one or more processors (202) may perform uplink reception based on the DCI.

Furthermore, one or more memories (204) of the second device (200) may store commands for performing the method described in the example of FIG. 9 when executed by one or more processors (202).

Hereinafter, a method for determining the DCI payload size according to whether STxMP is applied and the capabilities of the panel, etc., will be specifically described with reference to FIGS. 8 and 9.

Embodiment 1

Embodiment 1 relates to a method related to a DCI payload size used in codebook-based uplink transmission. Embodiment 1-1 relates to a TPMI field size, Embodiment 1-2 relates to an SRI field, and Embodiment 1-3 relates to a TPMI field and an SRI field when UL beam switching is applied.

Embodiment 1-1

In a basic wireless communication system, TPMI field 1 (or first TPMI field) can be used to indicate the codebook of panel 1 in a non-STxMP transmission, the codebook of panel 1 in a non-STxMP transmission, or the codebook of panel 1 in a STxMP transmission. Additionally, TPMI field 2 (or second TPMI field) in a basic wireless communication system can be used to indicate the codebook of panel 2 in a STxMP transmission.

As described above, panel 1 corresponds to SRS resource set 0, and panel 2 corresponds to SRS resource set 1, so STxMP transmission or non-STxMP transmission can be indicated through the SRS resource set selection field (or SRS resource set indicator field) of DCI. For example, when the SRS resource set indicator field value is 00, this may mean non-STxMP transmission using panel 1. When the SRS resource set indicator field value is 01, this may mean non-STxMP transmission using panel 2. When the SRS resource set indicator field value is 10, this may mean STxMP transmission using panels 1 and 2.

Therefore, the size of TPMI field 1 can be determined as the maximum value among 1) the bit size (B1) considering the CBSR applied to panel 1, the maximum value of the number of ranks, and the full mode power in case of non-STxMP transmission, 2) the bit size (B2) considering the CBSR applied to panel 2, the maximum value of the number of ranks, and the full power mode in case of non-STxMP transmission, and iii) the bit size (B3) considering the CBSR applied to panel 1, the maximum value of the number of ranks, and the full power mode in case of STxMP transmission. In addition, the size of TPMI field 2 can be determined as the bit size (B4) considering the CBSR applied to panel 2, the maximum value of the number of ranks, and the full mode power in case of STxMP transmission.

Additionally or alternatively, the size of TPMI field 1 may be determined as the maximum value among B1 and B3, and the size of TPMI field 2 may be determined as the maximum value among B2 and B4.

In order to consider the implementation diversity of the terminal, the base station can separate the following four cases and transmit parameters for each case to the UE via an RRC message, MAC-CE, or/and DCI. That is, each parameter value may be configured differently depending on the following four cases.

- Case 1: For non-STxMP transmission, CBSR, maximum number of ranks, full power mode, applied to panel 1
- Case 2: For non-STxMP transmission, CBSR, maximum number of ranks, full power mode, applied to panel 2
- Case 3: For STxMP transmission, CBSR, maximum number of ranks, full power mode, applied to panel 1
- Case 4: For STxMP transmission, CBSR, maximum number of ranks, full power mode, applied to panel 2

Embodiment 1-2

When CB PUSCH transmission is configured in a basic wireless communication system, SRI field 1 can be used to indicate SRS resources of panel 1 (i.e., SRS resource set 0 corresponding to panel 1) in non-STxMP transmission, SRS resource indication of panel 2 (i.e., SRS resource set 1 corresponding to panel 2) in non-STxMP transmission, or SRS resource indication of panel 1 (i.e., SRS resource set 0 corresponding to panel 1) in STxMP transmission. And, when CB PUSCH transmission is configured in a basic wireless communication system, SRI field 2 can be used to indicate SRS resources of panel 2 (i.e., SRS resource set 1 corresponding to panel 2) in STxMP transmission.

In order to consider the implementation diversity of the terminal, the base station may separate the following four cases and transmit parameters for each case to the UE via an RRC message, MAC-CE, or/and DCI. That is, each parameter value may be set differently depending on the following four cases.

- Case 1: Number of selectable SRS resources of panel 1 (i.e., SRS resource set 0) for non-STxMP transmission
- Case 2: Number of selectable SRS resources of panel 2 (i.e., SRS resource set 1) for non-STxMP transmission
- Case 3: Number of selectable SRS resources of panel 1 for STxMP transmission
- Case 4: Number of selectable SRS resources of panel 2 for STxMP transmission

Consequently, the field size of SRI field 1 may be determined as the maximum value among the number of selectable SRS resources (B1) of panel 1 (i.e., SRS resource set 0) in non-STxMP transmission, the number of selectable SRS resources (B2) of panel 2 (i.e., SRS resource set 1) in non-STxMP transmission, and the number of selectable SRS resources (B3) of panel 1 (i.e., SRS resource set 0) in STxMP transmission. In addition, the field size of SRI field 2 may be determined as the number of selectable SRS resources (B4) of panel 2 (i.e., SRS resource set 1) in STxMP transmission.

Additionally or alternatively, the size of SR1 field 1 may be determined as the maximum value among B1 and B3, and the size of SRI field 2 may be determined as the maximum value among B2 and B4.

Embodiment 1-3

In one embodiment of the present disclosure, the UL beam transmitted by STxMP panel 1 and the UL beam transmitted by STxMP 2 can be switched with each other due to UE rotation, etc., and the switching of the UL beam can be dynamically indicated by MAC-CE or DCI, etc.

In describing the present disclosure, a UL beam may correspond to a UL TCI state or a spatial relationship RS. That is, a UL beam transmitted by panel 1 may correspond to a UL beam, a UL TCI state or a spatial relationship RS applied to an SRS resource of SRS resource set 0, and a UL beam transmitted by panel 2 may correspond to a UL beam, a UL TCI state or a spatial relationship RS applied to an SRS resource of SRS resource set 1.

Here, TPMI field 1 can be used for codebook indication of STxMP panel 2, and TPMI field 2 may be used for codebook indication of STxMP panel 1. When considering dynamic beam switching, TPMI field 1 can be determined as the maximum value among B1, B2, B3, and B4 in embodiment 1-1, and TPMI field 2 can be determined as the maximum value among B3 and B4 in embodiment 1-1. However, this is only one embodiment, and both TPMI field 1 and TPMI field 2 can be determined as the maximum value among B1, B2, B3, and B4 in embodiment 1-1.

As another example of the present disclosure, it is assumed that dynamic switching between UL beams of panel 1 and panel 2 for STxMP transmission is supported. In this case, the field size of SRI field 1 may be determined as the maximum value among the number of selectable SRS resources of panel 1 (i.e., SRS resource set 0) in non-STxMP transmission, the number of selectable SRS resources of panel 2 (i.e., SRS resource set 1) in non-STxMP transmission, the number of selectable SRS resources of panel 1 (i.e., SRS resource set 0) in STxMP transmission, and the number of selectable SRS resources of panel 2 (i.e., SRS resource set 1) in STxMP transmission.

In addition, the field size of SRI field 2 can be determined as the maximum value among the number of selectable SRS resources of panel 1 (i.e., SRS resource set 0) when transmitting STxMP and the number of selectable SRS resources of panel 2 (i.e., SRS resource set 1) when transmitting STxMP.

Embodiment 2

Embodiment 2 relates to a method related to the DCI payload size used in non-codebook based uplink transmission.

The base station may separate the following four cases and transmit parameters for each case to the terminal via RRC message, MAC-CE, or/and DCI. That is, each parameter value can be set differently depending on the following four cases.

- Case 1: Bit size considering the number of selectable SRS resources and the maximum number of existing candidate SSBs (Lmax) applied to panel 1 (i.e., SRS resource set 0) during non-STxMP transmission (B1)

- Case 2: Bit size considering the number of selectable SRS resources and the maximum number of existing candidate SSBs (Lmax) applied to panel 2 (i.e., SRS resource set 1) during non-STxMP transmission (B2)
- Case 3: Bit size considering the number of selectable SRS resources and the maximum number of candidate SSBs (Lmax1) applied to panel 1 (i.e., SRS resource set 0) during STxMP transmission (B3)
- Case 4: Bit size considering the number of selectable SRS resources and the maximum number of candidate SSBs (Lmax2) applied to panel 2 (i.e., SRS resource set 1) during STxMP transmission (B4)

When dynamic switching of the UL beam transmitted by STxMP panel 1 and the UL beam transmitted by STxMP panel 2 is possible, for NCB PUSCH, SRS field 1 may be determined as the maximum value among B1, B2, B3, and B4, and SRS field 2 may be determined as the maximum value among B3 and B4.

In describing the present disclosure, a UL beam may correspond to a UL TCI state or a spatial relationship RS. That is, a UL beam transmitted by panel 1 may correspond to a UL beam, a UL TCI state or a spatial relationship RS applied to an SRS resource of SRS resource set 0, and a UL beam transmitted by panel 2 may correspond to a UL beam, a UL TCI state or a spatial relationship RS applied to an SRS resource of SRS resource set 1.

In embodiments 1 and 2, the maximum number of ranks of panel 1 (maxRank1) and the maximum number of ranks of panel 2 (maxRank12) may be the same or may be the same as a predefined maximum number of ranks. In embodiments 1 and 2, the CBSR of panel 1 and the CBSR of panel 2 may be the same or may be the same as a predefined CBSR. In embodiments 1 and 2, the maximum number of candidate SSBs of panel 1 (Lmax1) and the maximum number of candidate SSBs of panel 2 (Lmax1) may be the same or may be the same as a predefined maximum number of SSBs.

The embodiments described above may be combined and combined. In addition, the parameters and methods defined/set/indicated in the embodiments described above may be set/indicated or defined by the base station to the UE.

In the embodiment described above, when the characteristics of two transmission panels are different, the DCI payload size for scheduling UL transmission can be fixed regardless of which panel is used for UL transmission even if STxMP is applied.

General Device to which the Present Disclosure may be applied

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.   A method performed by a user equipment (UE) in a wireless communication system, the method comprising:

receiving downlink control information (DCI) including at least one of a first transmit precoding matrix indicator (TPMI) field or a second TPMI field from a base station; and
performing uplink transmission based on the DCI,

wherein a size of the first TPMI field is determined as a maximum value among a first bit size, a second bit size, and a third bit size, and

wherein each of the first bit size, the second bit size, and the third bit size is based on whether simultaneous transmission across multi-panels (STxMP) transmission is indicated, a type of codebook subset, a maximum value of a number of ranks, and a type of full power mode.

2. The method of claim 1, wherein:

the first bit size relates to a first case in which the STxMP transmission is not indicated, and the type of the codebook subset, the maximum value of the number of ranks, and the type of the full power mode are a first type of a codebook subset, a first maximum value of the number of ranks, and a first full power mode configured for a first sounding reference signal (SRS) resource set, and

the second bit size relates to a second case in which the STxMP transmission is not indicated, and the type of the codebook subset, the maximum value of the number of ranks, and the type of the full power mode are a second type of a codebook subset, a second maximum value of the number of ranks, and a second full power mode configured for a second SRS resource set.

3. The method of claim 1, wherein:
the third bit size relates to a third case in which the STxMP transmission is indicated, the type of the codebook subset, the maximum value of the number of ranks, and the type of the full power mode are a first type of a codebook subset, a first maximum value of the number of ranks, and a first full power mode configured for a first SRS resource set.

4. The method of claim 1, wherein:

a size of the second TPMI field is determined as a fourth bit size, and

the fourth bit size related to a fourth case in which the STxMP transmission is indicated, the type of the codebook subset, the maximum value of the number of ranks, and the type of the full power mode are a second type of a codebook subset, a second maximum value of the number of ranks, and a second full power mode configured for a second SRS resource set.

5. The method of claim 1, wherein:
whether the STxMP is transmitted is indicated by a SRS resource set indicator field included in the DCI.

6. The method of claim 5, wherein:

based on whether one of a first SRS resource set or a second SRS resource set is indicated by the SRS resource set indicator field, the STxMP transmission is not indicated, and

based on whether one of the first SRS resource set and the second SRS resource set is indicated by the SRS resource set indicator field, the STxMP transmission is indicated.

7. The method of claim 1, wherein:

the DCI includes a first SRS resource indicator (SRI) field and a second SRI field, and

a size of the first SRI field is determined as a maximum value among a fifth bit size, a sixth bit size, and a seventh bit size, and

each of the fifth bit size, the sixth bit size, and the seventh bit size is based on whether the STxMP transmission is indicated and a number of selectable SRS resources of a SRS resource set.

8. The method of claim 7, wherein:

the fifth bit size is related to a number of selectable SRS resources of a first SRS resource set based on the STxMP transmission not being indicated,

the sixth bit size is related to a number of selectable SRS resources of a second SRS resource set based on the STxMP transmission not being indicated, and

the seventh bit size is related to a number of selectable SRS resources of the first SRS resource set based on the STxMP transmission being indicated.

9. The method of claim 7, wherein:

a size of the second SRI field is related to a number of selectable SRS resources of a second SRS resource set based on the STxMP transmission being indicated.

10. The method of claim 1, wherein:
the configuration information related to the uplink transmission based on a codebook is transmitted from the base station to the UE via an radio resource control (RRC) message.

11. The method of claim 1, wherein:
the uplink transmission includes at least one of a physical uplink control channel (PUCCH), a physical uplink shared channel (PUSCH), or an SRS.

12. A user equipment (UE) in a wireless communication system, the UE comprising:

at least one transceiver; and
at least one processor connected to the at least one transceiver,
wherein the at least one processor is configured to:

receive, through the at least one transceiver, downlink control information (DCI) including at least one of a first transmit precoding matrix indicator (TPMI) field or a second TPMI field from a base station; and
perform uplink transmission based on the DCI,
wherein a size of the first TPMI field is determined as a maximum value among a first bit size, a second bit size, and a third bit size, and
wherein each of the first bit size, the second bit size, and the third bit size is based on whether simultaneous transmission across multi-panels (STxMP) transmission is indicated, a type of codebook subset, a maximum value of a number of ranks, and a type of full power mode.

13. A method performed by a base station in a wireless communication system, the method comprising:

transmitting downlink control information (DCI) including at least one of a first transmit precoding matrix indicator (TPMI) field or a second TPMI field to a user equipment (UE); and
performing uplink reception based on the DCI,
wherein a size of the first TPMI field is determined as a maximum value among a first bit size, a second bit size, and a third bit size, and
wherein each of the first bit size, the second bit size, and the third bit size is based on whether simultaneous transmission across multi-panels (STxMP) transmission is indicated, a type of codebook subset, a maximum value of a number of ranks, and a type of full power mode.

14. A base station in a wireless LAN system, the base station comprising:

at least one transceiver; and
at least one processor connected to the at least one transceiver,
wherein the at least one processor is configured to:

transmit, through the at least one transceiver, downlink control information (DCI) including at least one of a first transmit precoding matrix indicator (TPMI) field or a second TPMI field to a user equipment (UE); and
perform uplink reception based on the DCI,
wherein a size of the first TPMI field is determined as a maximum value among a first bit size, a second bit size, and a third bit size, and
wherein each of the first bit size, the second bit size, and the third bit size is based on whether simultaneous transmission across multi-panels (STxMP) transmission is indicated, a type of codebook subset, a maximum value of a number of ranks, and a type of full power mode.

15. A processing device configured to control a user equipment (UE) in a wireless communication system, the processing device comprising:

at least one processor; and
at least one computer memory operatively coupled to the at least one processor and storing instructions for performing operations upon being executed by the at least one processor,

wherein the operations comprise:

receiving downlink control information (DCI) including at least one of a first transmit precoding matrix indicator (TPMI) field or a second TPMI field from a base station; and
performing uplink transmission based on the DCI,
wherein a size of the first TPMI field is determined as a maximum value among a first bit size, a second bit size, and a third bit size, and
wherein each of the first bit size, the second bit size, and the third bit size is based on whether simultaneous transmission across multi-panels (STxMP) transmission is indicated, a type of codebook subset, a maximum value of a number of ranks, and a type of full power mode.

16. At least one non-transitory computer readable medium storing at least one instruction, wherein:
the at least one instruction executed by at least one processor controls a device in a wireless communication system to perform:

receive downlink control information (DCI) including at least one of a first transmit precoding matrix indicator (TPMI) field or a second TPMI field from a base station; and
perform uplink transmission based on the DCI,
wherein a size of the first TPMI field is determined as a maximum value among a first bit size, a second bit size, and a third bit size, and
wherein each of the first bit size, the second bit size, and the third bit size is based on whether simultaneous transmission across multi-panels (STxMP) transmission is indicated, a type of codebook subset, a maximum value of a number of ranks, and a type of full power mode.

# FIG.1

# FIG.2

FIG.3

# FIG.4

# FIG.5

Resource grid

A carrier
(up to 3300 subcarriers, i.e., 275 RBs)

A BWP

1 RB=12 subcarrier

1 RE

1 subcarrier

1 Symbol

l=0 ·····

k=0

# FIG.6

INITIAL CELL SEARCH — PSS/SSS& [DLRS]& PBCH (S601)

SYSTEM INFORMATION RECEPTION — PDCCH/ PDSCH (BCCH) (S602)

RANDOM ACCESS PROCEDURE — PRACH (S603), PDCCH/ PDSCH (S604), PUSCH (S605), PDCCH/ PDSCH (S606)

GENERAL DL/UL Tx/Rx — PDCCH/ PDSCH (S607), PUSCH/ PUCCH (S608)

· DL/UL ACK/NACK
· UE CQI/PMI RI REPORT USING PUSCH AND PUCCH

# FIG.7

Network                                    UE

CONFIGURATION        S701
INFORMATION

DOWNLINK CONTROL     S702
INFORMATION

PUSCH               S703
TRANSMISSION

# FIG.8

RECEIVING DCI INCLUDING AT LEAST ONE OF
A FIRST TPMI FIELD OR A SECOND TPMI FIELD        S810
FROM THE BASE STATION

PERFORMING UPLINK TRANSMISSION BASED        S820
ON THE DCI

# FIG.9

| TRANSMITTING DCI INCLUDING AT LEAST ONE OF THE FIRST TPMI FIELD OR THE SECOND TPMI FIELD TO THE UE | ∽ S910 |

| PERFORMING UPLINK RECEPTION BASED ON DCI | ∽ S920 |

EP 4 761 432 A1

# FIG.10

**EP 4 761 432 A1**

## INTERNATIONAL SEARCH REPORT

| International application No. |
|---|
| **PCT/KR2024/010926** |

<table>
<tr><td colspan="3"><strong>A.     CLASSIFICATION OF SUBJECT MATTER</strong></td></tr>
<tr><td colspan="3"><strong>H04W 72/232</strong>(2023.01)i; <strong>H04W 72/21</strong>(2023.01)i; <strong>H04W 72/1268</strong>(2023.01)i; <strong>H04W 8/24</strong>(2009.01)i; <strong>H04L 5/00</strong>(2006.01)i;<br><strong>H04B 7/06</strong>(2006.01)i</td></tr>
<tr><td colspan="3">According to International Patent Classification (IPC) or to both national classification and IPC</td></tr>
</table>

**B.     FIELDS SEARCHED**

Minimum documentation searched (classification system followed by classification symbols)

    H04W 72/232(2023.01); H04B 7/0456(2017.01); H04W 72/12(2009.01)

Documentation searched other than minimum documentation to the extent that such documents are included in the fields searched

    Korean utility models and applications for utility models: IPC as above
    Japanese utility models and applications for utility models: IPC as above

Electronic data base consulted during the international search (name of data base and, where practicable, search terms used)

    eKOMPASS (KIPO internal) & keywords: 제1-제2 TPMI 필드(first and second transmit precoding matrix indicator fields), 제 1-제3 비트 사이즈(first to third bit sizes), 최대 값(maximum value), STxMP(simultaneous transmission across multi-panels), 코드북 서브셋 유형(codebook subset type), 랭크 개수(number of ranks), 풀 파워 모드 유형(full power mode type)

**C.     DOCUMENTS CONSIDERED TO BE RELEVANT**

| Category* | Citation of document, with indication, where appropriate, of the relevant passages | Relevant to claim No. |
|---|---|---|
| Y | PANASONIC. UL Precoding for Multi-panel Transmission. R1-2304376, 3GPP TSG-RAN WG1 Meeting #113. Incheon, Korea. 15 May 2023.<br>    See sections 2.2.1, 2.2.2 and 2.4. | 1-16 |
| Y | OPPO. Discussion on UL precoding indication for multi-panel transmission. R1-2305406, 3GPP TSG-RAN WG1 Meeting #113. Incheon, Korea. 15 May 2023.<br>    See sections 2.1.1 and 2.1.2; and tables 1-2. | 1-16 |
| Y | NTT DOCOMO, INC. Discussion on multi-panel transmission. R1-2211974, 3GPP TSG-RAN WG1 Meeting #111. Toulouse, France. 07 November 2022.<br>    See pages 1-5; and table III. | 5-9 |
| A | KR 10-2019-0067731 A (LG ELECTRONICS INC.) 17 June 2019 (2019-06-17)<br>    See paragraphs [0185]-[0188]. | 1-16 |
| A | KR 10-2023-0022396 A (APPLE INC.) 15 February 2023 (2023-02-15)<br>    See paragraphs [0110]-[0121]. | 1-16 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 November 2024** | **01 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/010926**

| Patent document cited in search report | | | Publication date (day/month/year) | Patent family member(s) | | | Publication date (day/month/year) |
|---|---|---|---|---|---|---|---|
| KR | 10-2019-0067731 | A | 17 June 2019 | CA | 3030799 | A1 | 07 June 2020 |
| | | | | CA | 3030799 | C | 01 June 2021 |
| | | | | CN | 110771086 | A | 07 February 2020 |
| | | | | CN | 110771086 | B | 23 August 2022 |
| | | | | EP | 3520312 | A1 | 07 August 2019 |
| | | | | EP | 3520312 | B1 | 02 February 2022 |
| | | | | JP | 2020-509617 | A | 26 March 2020 |
| | | | | JP | 6770171 | B2 | 14 October 2020 |
| | | | | KR | 10-2019-0122616 | A | 30 October 2019 |
| | | | | KR | 10-2037326 | B1 | 28 October 2019 |
| | | | | US | 10355842 | B2 | 16 July 2019 |
| | | | | US | 10554360 | B2 | 04 February 2020 |
| | | | | US | 10594458 | B2 | 17 March 2020 |
| | | | | US | 10644855 | B2 | 05 May 2020 |
| | | | | US | 10999031 | B2 | 04 May 2021 |
| | | | | US | 2019-0182001 | A1 | 13 June 2019 |
| | | | | US | 2019-0238293 | A1 | 01 August 2019 |
| | | | | US | 2019-0356443 | A1 | 21 November 2019 |
| | | | | US | 2019-0379505 | A1 | 12 December 2019 |
| | | | | US | 2020-0195404 | A1 | 18 June 2020 |
| | | | | WO | 2019-112374 | A1 | 13 June 2019 |
| KR | 10-2023-0022396 | A | 15 February 2023 | CN | 115943665 | A | 07 April 2023 |
| | | | | EP | 4154585 | A1 | 29 March 2023 |
| | | | | US | 2024-0023086 | A1 | 18 January 2024 |
| | | | | WO | 2023-010487 | A1 | 09 February 2023 |

Form PCT/ISA/210 (patent family annex) (July 2022)